# EUROPEAN PATENT APPLICATION

(11) **EP 4 737 000 A1**
(43) Date of publication of application: **06.05.2026**
(21) Application number: 24383208.6
(22) Date of filing: 05.11.2024
(51) Int. Cl.: B01J 19/00, B01J 19/12, B01J 21/08, B01J 35/39, B01J 35/56, B01J 37/02

(54) **MACROPOROUS SILICON MONOLITH AND METHOD FOR PRODUCING A MACROPOROUS SILICON MONOLITH**

(71) Applicant: Universitat Politècnica De Catalunya, 08034 Barcelona (ES)
(72) Inventor: GUPTA, Yash, 08034 Barcelona (ES); LLORCA PIQUE, Jordi, 08034 Barcelona (ES); RODRÍGUEZ MARTÍNEZ, Ángel, 08034 Barcelona (ES); VEGA BRU, Didac, 08034 Barcelona (ES)
(74) Representative: Clarke, Modet y Cía., S.L.

(57) **Abstract**

A macroporous silicon monolith and a method for producing a macroporous silicon monolith are provided. The macroporous silicon monolith comprises a silicon substrate (7) including, on a surface (8) thereof, a structure of hollow silicon oxide tubes (14), the latter being functionalized with catalytic and/or photocatalytic materials (16).

## Description

### TECHNICAL FIELD

The present invention relates to support structures for catalytic and photocatalytic materials (monoliths) and their production methods. In particular, the invention relates to a macroporous silicon monolith and to a method for production thereof.

### BACKGROUND OF THE INVENTION

Catalytic monoliths are devices that contain a catalytic material which promotes and/or accelerates a chemical reaction, making them widely used in various chemical processes across different industries. Thus, catalytic devices used in different industries can have a monolithic geometry.

The use of support structures for catalysts has a long history in industry. For instance, WO2012136971A1 describes general structures and shapes used in catalytic converters in industry. The patent application highlights some issues that arise, particularly when using large structures, such as mechanical rigidity and strength, proper temperature control (uniformity, regulation, etc.), and pressure losses in the system. The type of structures they describe are metal-based tubular systems (mainly stainless steel), designed for large-scale industries, with sizes reaching lengths of up to 20 meters and diameters of up to 40 millimeters.

These structures typically operate with gas flows in a laminar regime, which necessitates long tubes. Reducing the length leads to smaller catalysts, easing the mechanical loads. WO2006016966A2 proposes the use of structures with channels in more than one direction, allowing the gas to flow in a turbulent regime, thereby slowing it down and increasing the interaction time with the catalytic particles, which allows for smaller monoliths.

Other proposals include layering catalytic layers and separating membranes, such as in WO2012112046A1. In this case, several of these groups are concatenated, allowing control of the inlet gas flow and product gases through separating membranes. These structures are complex to build, and it is necessary to find a balance between the size of the catalytic particles and the channel dimensions.

Another alternative for reducing total size is proposed in CN104258796B, where a structure of stainless steel capillary tubes wound in a spiral is described, achieving lengths of up to 300 meters. However, this structure faces challenges with gas passage due to the long tubes and small diameters.

Other similar solutions can be cited, based on stacked or complex structures to reduce dimensions, such as WO2008076903A1.

Regarding temperature control within reactors, US9441777B2 proposes the use of microreactors. These solutions are significantly smaller in size, even suitable for personal applications. Likewise, US9475026, aims to control the distribution of gases in microreactors to achieve a uniform flow.

Examples of microreactors include US007714274B2, using silicon, or CN101052463B. Another relevant example is WO2005094983A2, which describes microreactors on an alumina substrate, both employing micromachining techniques to fabricate these monoliths.

Lastly, emerging manufacturing techniques based on 3D printing have also been developed. For example, WO2018052287A1, which utilizes standard equipment to deposit, layer by layer, a catalyst-loaded paste, forming channels through which the reaction gases flow. Similarly, WO2018099957A1 creates fibers instead of channels.

The great advantage of 3D printing is that it allows the design of monoliths with virtually free geometries, as demonstrated in US11389765B2, where the monolith takes the form of a minimal surface, specifically a gyroid. This geometry combines the idea of turbulent flow in the manufacturing process to extend residence time and improve conversion.

Despite the evident advantages of 3D printing, it has significant limitations. On the one hand, the selection of materials may be restricted, as well as the dimensions and precision achievable with standard techniques. There are more precise methods, such as microstereolithography projection, though they face greater size limitations. Additionally, it should be noted that 3D printing techniques are inherently slow and not easily scalable.

In order to reduce operating temperatures, other studies propose alternative methods to supply reaction energy beyond thermal energy, specifically using light as an energy source: photocatalysis.

In the study *"*Dynamic photocatalytic hydrogen production from ethanol-water mixtures in an optical fiber honeycomb reactor loaded with Au/TiO2", Elena Taboada et al., Journal of Catalysis, 309 (January 2014), 460-467, the evolution of hydrogen production from ethanol via photocatalysis using optical fibers inserted into typical cordierite monoliths is analyzed. Similarly, the articles *"*Effect of temperature on the gas-phase photocatalytic H2 generation using microreactors under UVA and sunlight irradiation", Alejandra Castedo et al. Fuel, 222 (June 2018), 327-333, and *"*Kinetic analysis and CFD simulations of the photocatalytic production of hydrogen in silicon microreactors from water-ethanol mixtures", Alejandra Castedo et al., Applied Catalysis B: Environmental, 203 (April 2017), 210-217*,* follow a similar line of research. They study microreactors on silicon substrates coated with photocatalysts and analyze hydrogen production from ethanol based on conditions such as temperature, illumination, and reactor geometries.

The work *"*An investigation of efficient microstructured reactor with monolith Co/anodic γ-Al2O3/Al catalyst in Fischer-Tropsch synthesis", Li Zhang et al. International Journal of Hydrogen Energy, 43/6 (February 2018), 3077-3086, explores a microreactor manufactured through methods different from microfabrication: the stacking of catalyst-coated plates. This reactor is simple to fabricate and exhibits high activity and selectivity rates in the production of long-chain hydrocarbons.

Other manufacturing techniques are based on sol-gel processes. The monoliths produced typically exhibit a hierarchical pore structure with "large" sponge-like pores and "small" pores (with diameters 10 to 100 times smaller than the larger pores) embedded in the sponge fibers. Relevant references include *"*Versatile double-templating synthesis route to silica monoliths exhibiting a multimodal hierarchical porosity", Jan Henrik Smått et al., Chemistry of Materials, 15/12 (June 2003), 2354-2361; *"Materials with multimodal hierarchical porosity',* Wojciech Pud 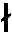 o et al., in Surface Modification for Chemical and Biochemical Sensing (SMCBS'2007) (W 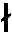 odowice, Poland, 2007), 22; and *"*Functionalized Inorganic Monolithic Microreactors for High Productivity in Fine Chemicals Catalytic Synthesis", Abdelkrim EI Kadib et al. *Angewandte Chemie International Edition*, 48/27 (June 2009), 4969-4972.

Finally, the use of macroporous silicon as monoliths is proposed in *"Macroporous silicon coated with M*/*TiO2 (M=Au,Pt)* as a *highly efficient photoreactor for hydrogen production",* Jaros 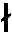 aw Serafin et al., Chemical Engineering Journal, 393 (August 2020), 124701. The functionalized monoliths offer promising results due to the small dimensions and high aspect ratio of the microchannels. Additionally, the optical properties of macroporous silicon enhance light utilization.

### DESCRIPTION OF THE INVENTION

An object of the present invention is to provide a macroporous silicon micromonolith that is designed to produce highly efficient catalytic or photocatalytic microreactors for various chemical reactions. The invention also covers the manufacturing process of the macroporous silicon monolith, which serve as a support for catalytic substances, allowing reactants to flow and effectively interact with the catalysts.

The proposed monolith has applications in various industries, including automotive, energy production, and research, among others. For instance, it can be used in the photodecomposition of water vapor or other vapors and gases, particularly for hydrogen production.

According to one aspect, the present invention provides a macroporous silicon monolith, comprising a silicon substrate including, on a surface thereof, a structure of hollow silicon oxide tubes, the latter being functionalized with catalytic and/or photocatalytic materials such as particles.

According to another aspect, the present invention also provides a method for producing a macroporous silicon monolith. The method comprises providing a macroporous silicon sample comprising a silicon substrate, producing on a surface of the silicon substrate a structure of silicon oxide tubes via a porosification and oxidation process, and functionalizing the structure of silicon oxide tubes with catalytic and/or photocatalytic materials.

In some embodiments, the catalytic and/or photocatalytic materials comprise inorganic oxide micro and/or nanoparticles.

In some embodiments, the structure of hollow silicon oxide tubes comprises a coating of a photocatalyst material. In this case, the catalytic and/or photocatalytic materials are deposited or impregnated over said coating.

For example, the photocatalyst material can comprise a semiconductor oxide such as titanium oxide (TiO₂).

In some embodiments, the base of the structure of hollow silicon oxide tubes comprises one or more reflective layers.

In some embodiments, the catalytic and/or photocatalytic materials comprise titanium dioxide. Alternatively or complementarily, in other embodiments, they comprise noble metal particles (e.g. platinum, gold, palladium, among others).

In some embodiments, the diameter of the hollow silicon oxide tubes is modulated in depth.

In some embodiments, the hollow silicon oxide tubes are interconnected through bridges.

In some embodiments, the structure of hollow silicon oxide tubes is sealed with a transparent element comprising a plurality of openings for the entry of reactants and exit of reaction products.

In some embodiments, the porosification and oxidation process comprises a light-assisted electrochemical etching or a reactive ion etching.

The proposed macroporous silicon micromonolith represents a significant advancement in the field of heterogeneous catalysis as it provides a highly porous and stable surface, maximizing active surface exposure and enhancing catalytic process efficiency. The unique properties of silicon oxide, combined with its microtubular design, make the monolith ideal for a wide range of industrial applications, including:
Petrochemical Industry:
   - Petroleum Refining: Catalytic monoliths are widely used in catalytic cracking, hydrocracking, and reforming processes. Their ability to withstand high temperatures and pressures makes them ideal for breaking down heavy hydrocarbons into lighter, more valuable products.
   - Natural Gas Conversion: These catalysts are essential in converting natural gas into valuable chemicals such as methanol and other oxygenated compounds. The microtubular structures enable more efficient gas molecule diffusion, increasing the conversion rate.
   - Desulfurization Processes: For removing sulfur compounds from petroleum, silicon oxide monoliths provide an effective medium for reducing sulfur emissions, helping meet environmental standards.
Chemical Industry:
   - Synthesis of Fine Chemicals: The high selectivity and efficiency of these catalysts facilitate the production of fine chemicals, including pharmaceuticals and agrochemicals, through cleaner and more sustainable reactions.
   - Polymerization Reactions: They are used in polymerization processes, where their thermal and mechanical stability contributes to the production of polymers with specific properties.
   - Fertilizer Production: In the fertilizer industry, monolithic catalysts help optimize the synthesis reactions of ammonia and nitric acid, improving the energy efficiency of these processes.
Automotive Industry:
   - Exhaust Gas Emission Control: Catalytic monoliths are essential in automotive catalytic converters to reduce harmful gas emissions, such as CO, NOx, and CH4, transforming them into less harmful compounds before releasing them into the environment.
   - Hydrogen Production: In fuel cells for vehicles, these catalysts facilitate the production and use of hydrogen as a clean energy source, contributing to sustainable mobility.
Energy Industry:
   - Fuel Cells: Fuel cells using silicon oxide monoliths improve the efficiency of electrochemical reactions, allowing more efficient conversion of chemical energy into electrical energy.
   - Biofuel Production: In the transformation of biomass into biofuels, these catalysts promote more efficient and selective reactions, reducing the formation of undesirable by-products.
Pharmaceutical Industry:
   - Pharmaceutical Synthesis: Catalytic monoliths facilitate the synthesis of critical intermediates in the production of active pharmaceutical ingredients, improving the purity and yield of final products.
Environmental Treatment:
   - Wastewater Purification: These catalysts can be used in wastewater treatment processes to remove organic and inorganic contaminants, contributing to water resource conservation.
   - CO2 Capture and Conversion: In capturing and converting carbon dioxide into useful chemicals, silicon oxide monoliths play a crucial role in mitigating climate change.
Emerging Applications:
   - Nanotechnology: Microtubular structures can be used as support for catalytic nanoparticles, enhancing the efficiency of reactions at the nanoscale.
   - Food Industry: Applications in the food industry are being explored for the synthesis of additives and the decomposition of organic waste.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:

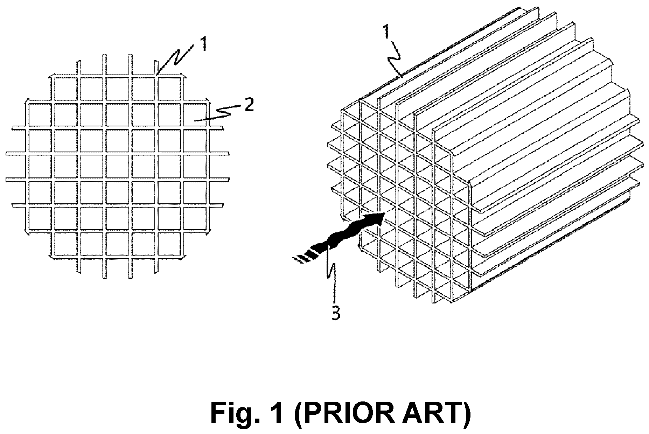

Fig. 1 shows front and isometric views of a prior art structure 1 based on a ceramic catalyst (e.g., cordierite) manufactured in a single step through continuous extrusion. The structure has a honeycomb shape with square cells 2, though it is not limited to this geometry. This structure is later coated with a layer of catalyst material, for example, in paste form. In the structure, a gas containing reactants 3 passes through the cells 2, reacting with the catalyst on the surface.

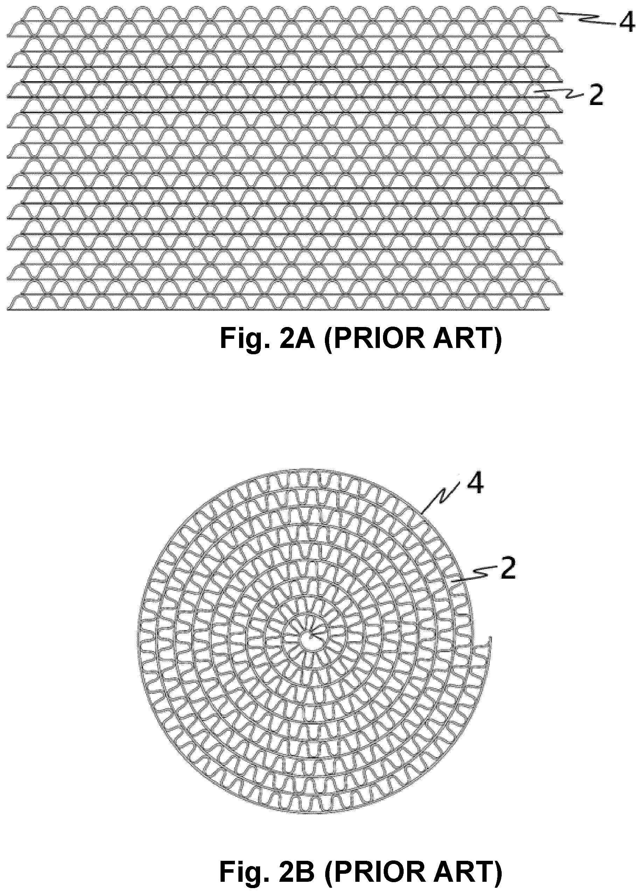

Figs. 2A and 2B are front views of other prior art metal-based catalyst structures. In Fig. 2A, a prismatic structure is formed by stacking corrugated metal sheets 4, while in Fig. 2B, the structure is created by rolling a corrugated metal sheet. The cells 2 are formed by the gaps between the corrugations. These structures are then coated with a layer of catalyst material, for example, in paste form. The gas with the reactants 3 flows through the cells 2 in a manner similar to the structure shown in Fig. 1.

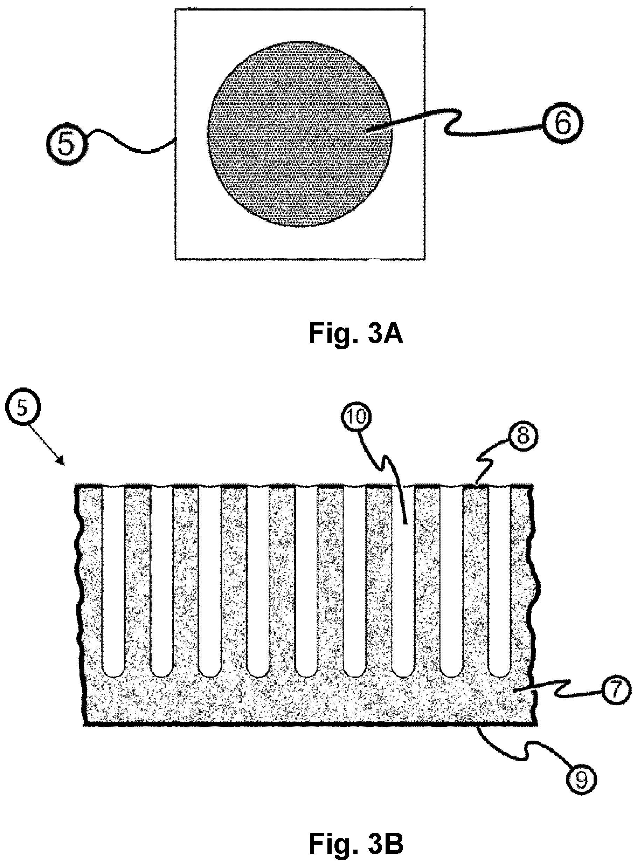

Fig. 3A illustrates an example of a macroporous silicon sample 5 after a porosification process, resulting in a region with pores 6. Fig. 3B shows a cross-sectional view of a silicon substrate 7 after the porosification process. The pores 10 grow inside the silicon substrate 7, starting from the treated surface 8 (front or upper surface) and extending, typically in the form of straight cylinders, toward the opposite surface 9 (back or lower surface).

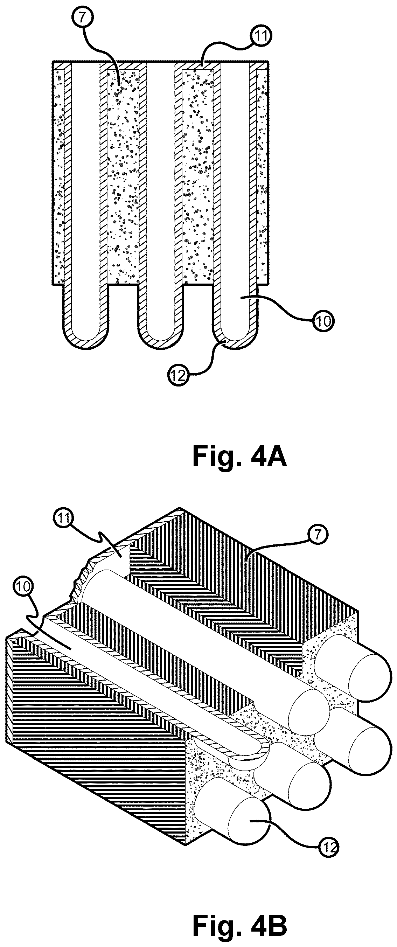

Fig. 4A shows a cross-sectional view of a macroporous silicon sample after the oxidation and alkaline etching process to expose the tube (pore) tips 12. The silicon oxide layer 11 ensures that the porous structure remains intact. Fig. 4B shows an isometric view of a macroporous silicon sample after the oxidation and etching process to reach the pore tips 12.

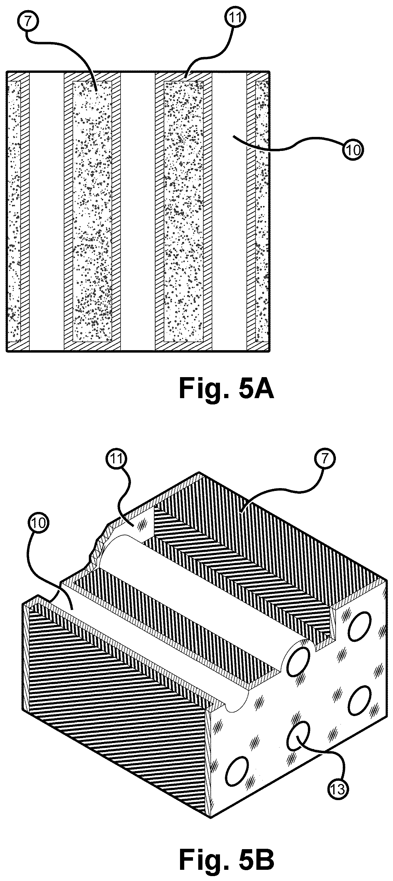

Fig. 5A shows a cross-sectional view, and Fig. 5B shows an isometric view, of a macroporous silicon monolith after the step of opening the porous membrane and re-oxidation. Upon removing the pore tips 12, a pore 10 is left inside the silicon substrate 7 with an exit opening 13, allowing both sides of the monolith to be connected and enabling the free flow of the gas containing the reactants 3.

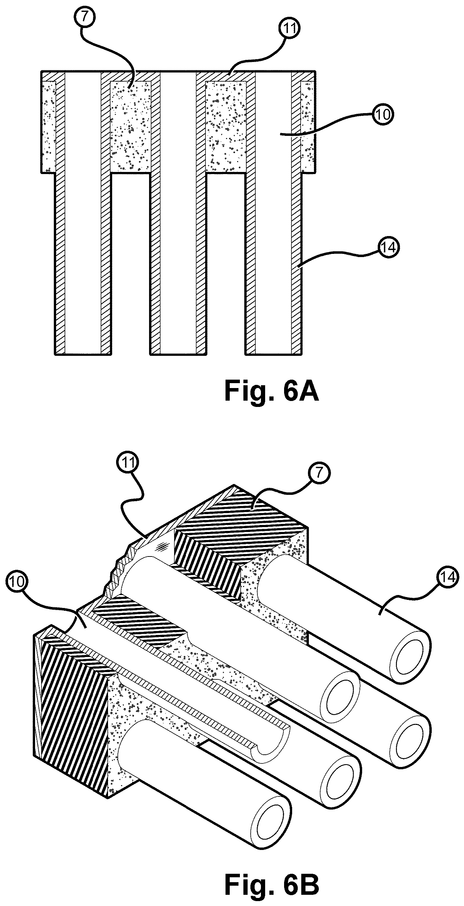

Fig. 6A shows a cross-sectional view, and Fig. 6B shows an isometric view, of a macroporous silicon monolith after removing the tips and further etching of the silicon substrate 7 to free the hollow silicon oxide tubes 14. The pores 10 remain open after removing the pore tips 12, allowing the passage of reactants 3 through the monolith, while the hollow silicon oxide tubes 14 are largely free from the silicon substrate 7 and exposed. A portion of the hollow silicon oxide tubes 14 still remains within the remaining silicon substrate 7, which serves as structural support.

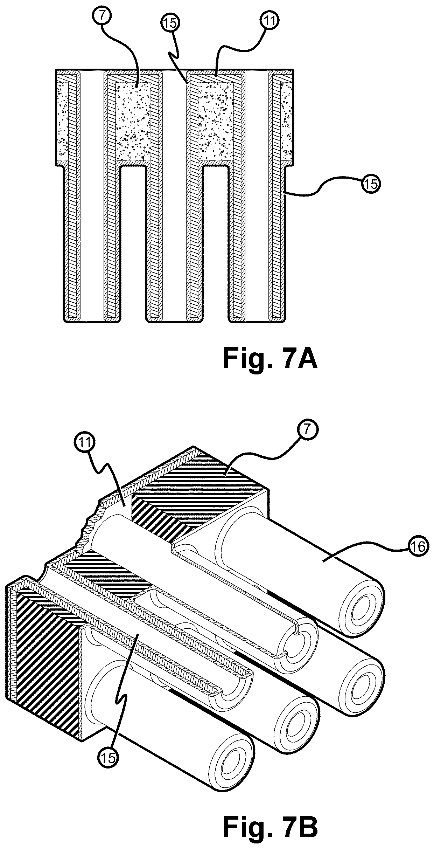

Fig. 7A shows a cross-sectional view, and Fig. 7B shows an isometric view, of a macroporous silicon monolith after being coated 15 with a layer of photoactive material and functionalized with catalytic and/or photocatalytic materials 16 (e.g. micro and/or nanoparticles). The coating 15 is applied to cover the entire exposed surface of the monolith, both outside and inside the hollow silicon oxide tubes 14 and the silicon substrate 7. The resulting structure features tubes, either free or embedded in the silicon substrate 7, coated 15 and functionalized with a catalyst.

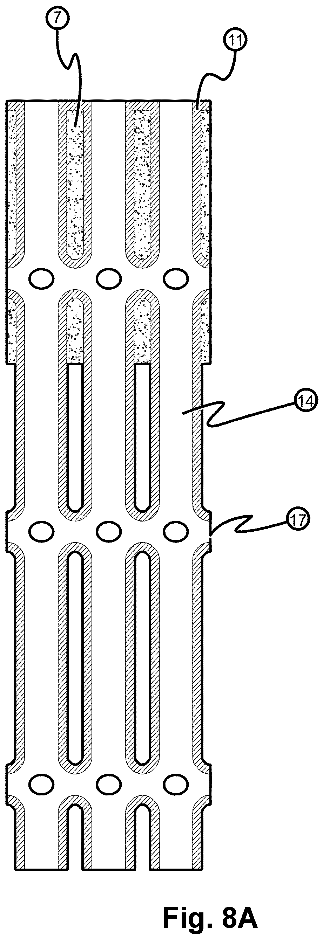

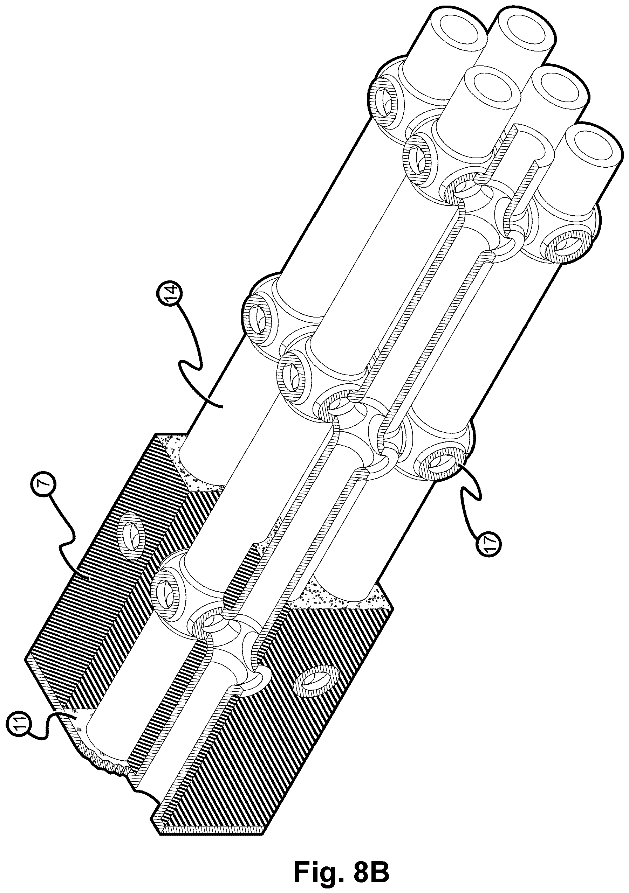

Fig. 8A shows a cross-sectional view, and Fig. 8B shows an isometric view, of a macroporous silicon monolith after the membrane has been opened, and the silicon substrate 7 has been further etched to free the hollow silicon oxide tubes 14. This particular structure has tubes connected to each other by bridges 17, obtained during the porosification process by appropriately modulating the pore profile. This type of monolith allows the free circulation of gas-phase reactants 3 between ends, but it is more robust than structures with only free cylindrical tubes (see Fig. 6).

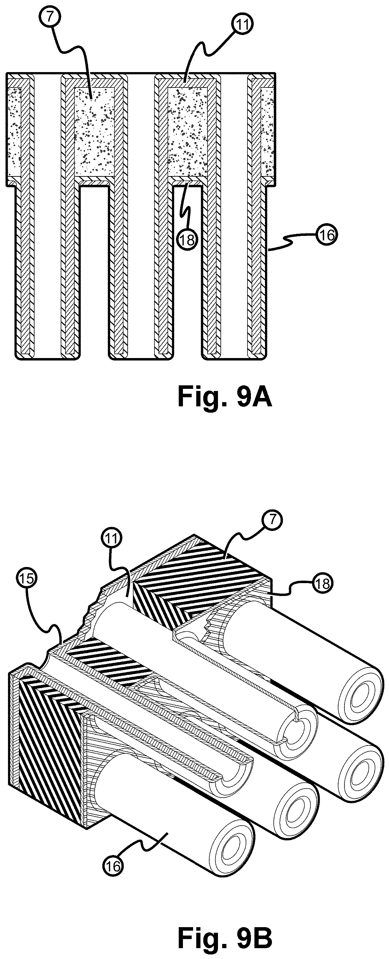

Fig. 9A shows a cross-sectional view, and Fig. 9B shows an isometric view, of a macroporous silicon monolith after functionalization of the hollow silicon oxide tubes 14 with catalytic and/or photocatalytic materials 16. In this structure, a reflective material layer 18 has been added to the bottom face of the monolith in such a way that the illumination of the tubes is not lost in the silicon substrate 7.

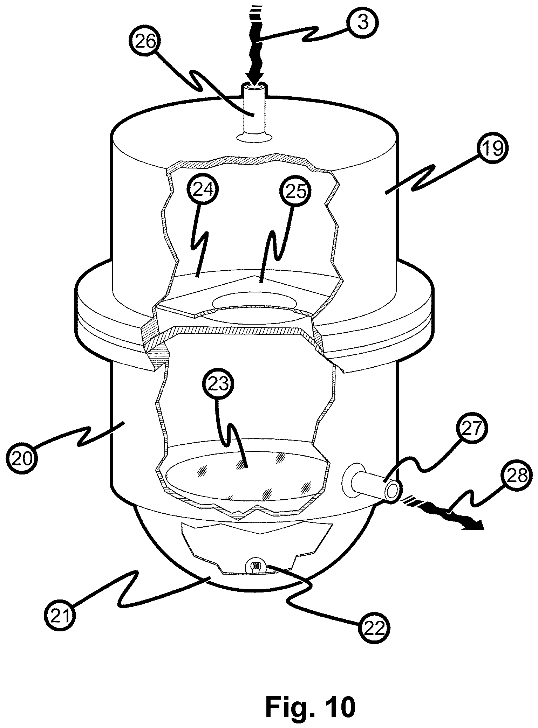

Fig. 10 shows an example of a complete reactor for photocatalysis. The reactor consists of a top cover 19 and a bottom cover 20, between which a support 24 for the functionalized monolith (referred as element 25) is placed. The covers 19, 20 have openings for the inlet 26 of the reactive gases 3 and for the outlet 27 of the resulting products 28. To carry out the photocatalysis process, one of the covers has an element 23 (e.g. a window) that is impermeable and transparent to the light emitted by a source 22 located in a spotlight 21 attached to the bottom cover 20.

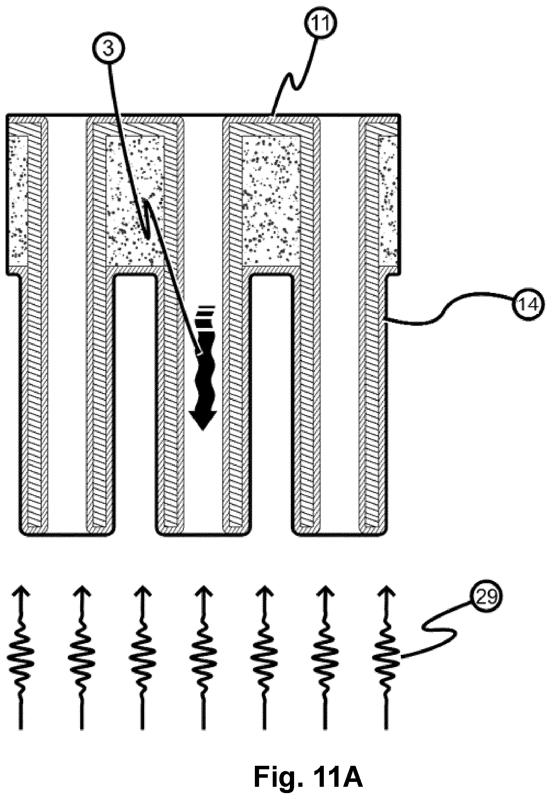

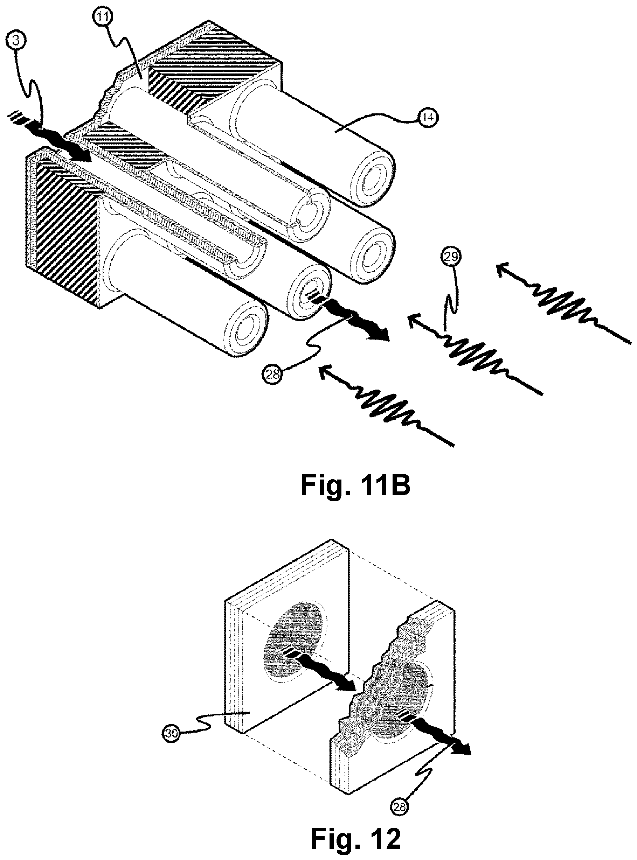

Fig.11A shows a cross-sectional view, and Fig.11B shows an isometric view, of a macroporous silicon monolith with exposed and functionalized tubes, such that their principle of operation as photocatalytic microreactors is described. The gas with the reactants 3 enters through one of the mouths of the tubes 14 (in the figure, through the top face) and travels through the tubes 14, reacting with the catalytic micro/nanoparticles on the surface. At the exit from the other end, the reaction products 28 are obtained. For the reaction to take place, the monolith is illuminated with appropriate light 29 on the side with the exposed tubes 14 (bottom face).
Fig. 12 shows a stack 30 of macroporous silicon monoliths. This improves the conversion efficiency of the reactants 3 into products 28 as they pass through the functionalized tubes 14.

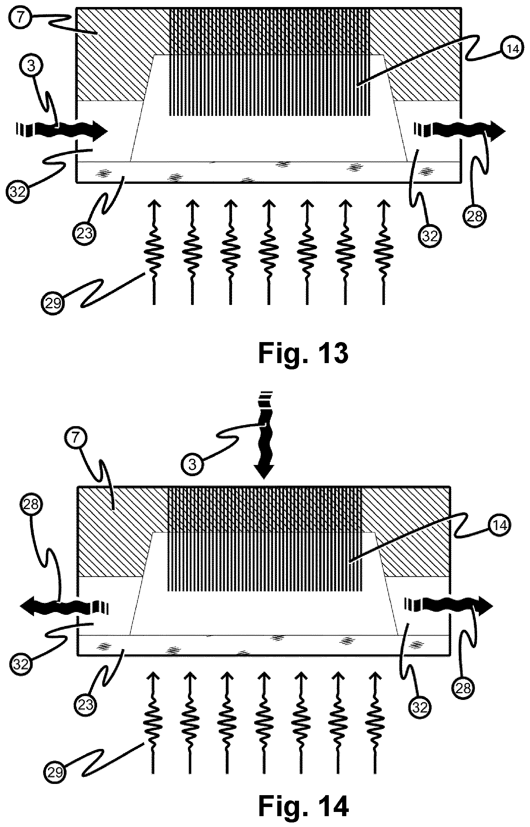

Fig. 13 shows a cross-sectional view of a macroporous silicon monolith with exposed and functionalized tubes, describing its principle of operation as lateral photocatalytic microreactors. In this configuration, channels 32 are created (for example, in the silicon substrate 7), and the back side of the monolith is sealed with a window 23, so that the gas must pass through the tubes 14 externally in a perpendicular manner. The gas with the reactants 3 enters through some of the openings 32, and the products 28 exit through the other openings 32. For the reaction to take place, adequate light 29 is provided externally to the monolith. To avoid gas leaks, the tubes can be sealed.
Fig. 14 shows a cross-sectional view of a macroporous silicon monolith with exposed and functionalized tubes, describing its principle of operation as transversal photocatalytic microreactors. In this configuration, channels 32 are created (for example, in the silicon substrate 7), and the back side of the monolith is sealed with a window 23. In this case, the tubes 14 are not sealed but only functionalized on both sides, and the reactants 3 pass through the interior of the tubes 14 and externally, with the product gas 28 being obtained at the exit. The direction of gas flow may be as shown or alternatively reversed. The light 29 needed for photocatalysis is provided to the monolith by an external source.

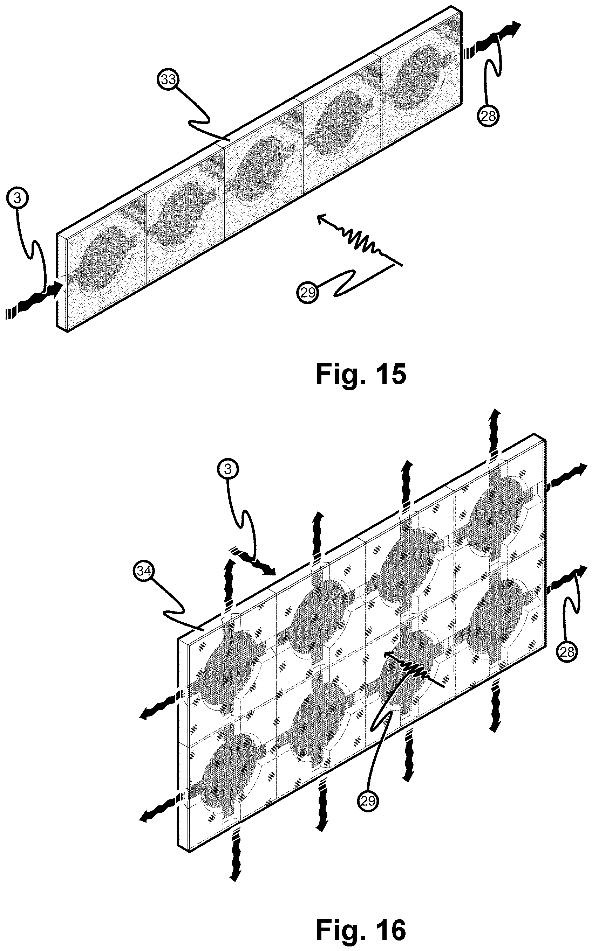

Fig. 15 shows a concatenation 33 of macroporous silicon monoliths, sealed and with the tubes blocked, in a one-dimensional configuration where the gas with the reactants 3 enters through one end via a designated channel, passes through the different monoliths, reacting and resulting in products 28 at the exit. The illumination 29 is provided externally to the monoliths through the face with the window.
Fig. 16 shows another concatenation 34 of monoliths, sealed and with the tubes opened, in a two-dimensional configuration where the gas with the reactants 3 enters through the tubes, passes through the different monoliths via the interconnecting channels, reacting and resulting in products 28 at the exit. The direction of gas flow can be reversed. The illumination 29 necessary for photocatalysis is provided externally.

### DETAILED DESCRIPTION OF THE INVENTION AND OF PREFERRED EMBODIMENTS

The present invention relates to support structures for catalytic and photocatalytic materials, commonly referred to as monoliths, along with their production methods. Particularly, the invention proposes a macroporous silicon monolith comprising a three-dimensional structure of silicon oxide tubes, offering a novel design that maximizes the effective surface area for catalytic reactions. The unique construction enhances chemical and thermal resistance, along with superior mechanical strength, ensuring robustness and durability in demanding environments.

The present invention also relates to the manufacturing method of the macroporous silicon monolith. The monoliths produced through the method exhibit high catalytic efficiency and are designed for long-term use, allowing for multiple reuses without significant degradation in performance, making them ideal for sustained applications.

Particularly, the present invention is based on the following points:
1. Creation of a high surface-to-volume ratio structure. By using macroporous silicon, hollow tube structures are created, etched into silicon and separated by thin walls.
2. A manufacturing technique used to create macroporous silicon is light-assisted electrochemical etching, although other techniques such as reactive ion etching (RIE) can also be used to fabricate similar structures. The technique used in this invention allows for the creation of ordered tubes with varying depth, diameter, and spacing between them.
3. The light-assisted electrochemical etching technique also allows for modulation of tube diameter in depth, enabling even higher surface-to-volume ratios.
4. To create transparent catalyst support structures (so that light, in the case of photocatalysts, is absorbed by the photocatalyst particles), the silicon is oxidized, and the remaining unoxidized silicon is removed from the active regions for catalysis. This results in discs containing a high density of tubes with diameters ranging from a few microns to tens of nanometers. These tubes are long relative to their diameter, offering a high surface-to-volume ratio for the device.

Fig. 3B shows a detail of the porosified region 6 of Fig. 3A of a macroporous silicon sample 5 that is obtained after a porosification process of the silicon substrate 7 with pores 10. By employing advanced microfabrication techniques, a highly regular mesh of cells is created within the silicon substrate 7, which forms tubular structures (or pores) 10. These pores 10 typically have a circular cross-section, although other geometries are possible, and their layout can be customized according to the design specifications. The dimensions of the pores vary, with diameters ranging from several microns to tens of nanometers, and they can extend through the entire thickness of the silicon substrate 7 used as the base material.

The shape, size, and orientation of the pores 10 can be controlled depending on the manufacturing technique and the physical characteristics of the silicon block used.

A specific porosification method proposed in this invention is light-assisted electrochemical etching. This technique allows for the efficient creation of long pores with a high aspect ratio and enables fine control of pore size during the fabrication process. Other possible methods for creating porous silicon substrates include reactive ion etching (RIE). Electrochemical porosification is particularly advantageous due to its ability to produce large, high-aspect-ratio structures with relative ease, while offering flexibility in adjusting pore dimensions as required.

In a particular embodiment, thermal oxidation is applied to the macroporous silicon substrate 7. During this process, the exposed silicon surfaces, including the walls of the pores, are transformed into a high-quality layer of silicon oxide 11, which uniformly coats the entire exposed surface of the structure. Silicon oxide, a key component of materials such as quartz and glass, is renowned for its exceptional resistance to chemical corrosion, mechanical durability, high-temperature tolerance, and long-term stability.

This robust silicon oxide layer 11 serves as the foundational substrate onto which the catalytic material is deposited. The combination of the high surface area of the macroporous silicon substrate 7 and the protective properties of silicon oxide layer 11 makes this structure highly effective for use in catalytic and photocatalytic applications, ensuring both longevity and efficiency in various chemical reactions.

Before depositing the catalytic and/or photocatalytic materials 16, for example, micro/nanoparticles (see Fig. 7B), the pores 10 have to be opened to allow fluid to pass through them from one end to the other. This step is key for enabling the entry of reactants at one end 9, ensuring their free circulation within the pores 10, and allowing the products formed during the reactions 28 to exit through the exit opening 13 (see Fig. 5B). By ensuring an open and continuous pore structure, the reactants can interact efficiently with the catalyst along the entire length of the pores, optimizing the catalytic or photocatalytic reactions that take place within the structure.

To achieve this, the silicon substrate 7 is etched from the opposite side 9 to the porous surface 8, reducing the thickness of the substrate to expose the ends of the pores within the silicon substrate 7. Various techniques can be used for this recessing process, with a particular method in this invention being wet chemical etching using an alkali such as potassium hydroxide (KOH) or tetraethylammonium hydroxide (TMAH). During this etching process, the protective silicon oxide layer 11 remains resistant to chemical attack, ensuring that only the silicon around the tips of the pores 10 dissolves, exposing the pore tips 12 (see Figs. 4A and 4B). The etching process is carefully controlled to stop once the tips 12 are exposed, typically progressing no more than a distance equivalent to two or three times the diameter of the pores 10. This precision ensures optimal exposure of the pore ends without compromising the structural integrity of the silicon substrate 7.

Once the inner end of the pores is reached, the pores 10 are opened. This is done by removing the oxide tip of the tube 12, leaving the inner end open 13. A particular way in this invention is the total dissolution of the entire silicon oxide layer using hydrofluoric acid (HF) and the subsequent recreation of said silicon oxide layer 11 in a new oxidation step. Once this step is completed, a coating 15 is applied (see Figs. 7A and 7B).

The catalyst used, as well as the deposition method, can be tailored based on the specific application and the chemical reactions of interest. In a particular embodiment, noble metal catalytic and/or photocatalytic materials 16, such as platinum, gold, or palladium, are employed. The deposition method can involve impregnating the surface of the silicon oxide layer 11 with a suspension of these particles 16 in alcohol. Following impregnation, the structure is calcined, a process that heats the system to a high temperature, effectively binding the micro/nanoparticles to the surface, ensuring a stable and durable (photo)catalytic layer.

A second form of the structures described therein allows their use in photocatalytic applications, and therefore work at moderate temperatures or room temperature. In particular, this second form starts from the macroporous silicon structure 5 after fabrication. Modifications in the fabrication process are imposed by the need to maximize light absorption by the catalyst. In particular, photocatalysis processes employ light sources whose wavelengths span the spectrum from the visible to the ultraviolet spectrum. It is the case that silicon, although it is optically transparent for wavelengths in the mid-infrared and longer, is an opaque material for wavelengths shorter than about 1 µm (near-infrared). If one were to employ the above-described structures directly, the light power would be lost by absorption in the substrate and little or none would reach the catalyst, which is where it is really useful, resulting in very poor conversion efficiencies. That is why the present invention further describes this second form of the microreactor, in which much of the silicon substrate 7 is replaced by silicon oxide layer 11 which is optically transparent at the wavelengths of interest and thus incurs no absorption losses in the substrate, significantly increasing efficiency. This invention further describes an extension of this idea by eliminating excess silicon between pores 10 to further increase efficiency.

In this case, the same first post-porosification oxidation step is carried out, but now the silicon oxide layer 11 has a double function. On the one hand, this silicon oxide layer 11 is used as a protective layer before the next manufacturing step; on the other hand, the silicon oxide layer 11 also fulfills a structural function since it has to support its own weight and resist possible mechanical stresses affecting the macroporous silicon monolith while keeping the structure intact.

Considering these needs, the oxidation step of the silicon substrate 7 is carried out with a sufficient thickness so that it can support itself once the pores 10 are released. In a particular embodiment, thermal oxidation is used, since it results in a highest quality oxide.

The next manufacturing step is again the recessing of the opposite surface 9 to the porous surface 8 until the pore tip 12 is reached, and the subsequent opening 13 of the pores. In this embodiment, the pores 10 are to be opened by removing only the exposed tip 12, while respecting the remainder of the thick silicon oxide layer 11. In a particular embodiment, this is done by a controlled attack (by time, for example) with HF of the newly exposed pores.

Once the pores 10 have been opened, the structure still contains the silicon from the silicon substrate 7 around the silicon oxide layer 11 coated tubes and it becomes necessary to remove this silicon to leave only the layer of low absorption material. This step can be performed by continuing the previous attack. Important in this process step are the characteristics and geometry of the silicon oxide layer 11, the strength of the material according to the chosen etching method and the desired etching depth. In a particular embodiment, TMAH is used to dissolve the silicon from the silicon substrate 7 due to its null reactivity with the silicon oxide layer 11.

After this step, the resulting structure consists of hollow silicon oxide tubes 14, which can be made extremely long, and take advantage of the total incident light. It should be noted that it is not possible to completely remove the silicon from the silicon substrate 7, since it is necessary to give the resulting structure a platform on which to support the released tubes 14 and to provide some rigidity and mechanical strength to the assembly.

Once the structure of hollow silicon oxide tubes 14 has been formed, the next step involves coating 15 the tubes. In an embodiment, a thin initial coating is applied to the silicon oxide tubes 14 with a photocatalyst material (i.e. a material that exhibits photogeneration activity at the relevant working wavelengths). This coating enhances the device's ability to convert light into usable energy for the desired photocatalytic reactions. After applying this initial coating 15, the next step involves incorporating the catalytic and/or photocatalytic materials 16 onto the coated surface. In a particular embodiment, the photocatalytic material used is a thin layer of titanium dioxide (TiO₂).

The structure thus prepared allows maximum use of the incident light. This is achieved by the great flexibility of the structure, achieving high aspect ratios, which can be provided with advanced geometries (See Figs. 8A and 8B for an example), and not only straight cylindrical tubes, achieving different effects such as longer residence time of the reagents, higher light penetration, etc.

Regarding illumination, either an artificial light source or solar illumination can be used, resulting in photocatalytic converters with low energy footprint. A concrete application would be the production of green hydrogen.

The proposed macroporous silicon monolith can be used directly. The gas with the reactants 3 is passed through the hollow silicon oxide tubes 14 and illuminated by a suitable light 29, such that reactions take place on the surface of the tubes 14 and reaction products 28 are obtained.

These structures 30 can be stacked 31 to increase the efficiency of the reaction, such that that portion of gas 3 which has not reacted in earlier stages, has an opportunity to react in later stages.

Referring now to Figs. 9A and 9B, in this embodiment, one or more reflective layers 18 are placed at the base of the hollow silicon oxide tube structure. The reflective layer(s) 18 can be applied in different stages of the fabrication process. Specifically, they may be deposited either before or after the functionalization of the hollow silicon oxide tubes 14 with the catalytic and/or photocatalytic materials 16 or before or after the coating 15 is applied.

As illustrated in Fig. 12, the proposed macroporous silicon monoliths can be stacked together 30 to increase the efficiency of the reaction. In this manner, the portion of gas 3 which has not reacted in earlier stages, has an opportunity to react in later stages.

Referring to Figs. 13 and 14, in these embodiments, it shown how openings (or channels) 32 are created and then how the rear face of the macroporous silicon monolith is encapsulated with a transparent and impermeable element 23, such that the gas containing the reactants 3 enters through some of these channels 32, passes through the outside of the functionalized tubes 14 and reacts with the catalyst, the resulting products 28 being collected through the other channel 32. The illumination needed for the reaction 29 is provided by external means. In one particular embodiment, the channels 32 are created in the silicon substrate 7 of the finished monolith. In another particular embodiment, the element 23 may be shaped such that most of the gas is forced to pass through the uncovered tubes 14, and the tubes 14 are plugged so that the gas passes only through the outer face of the tubes 14.

In the embodiment of Fig. 14, the tubes 14 are unblocked and are used in the catalysis process. This increases the available active surface area, without increasing the volume, resulting in improved conversion efficiency. In this case, the gas containing the reactants 3 enters through the tubes 14 and exits through the channels 32, although the system can also be operated in reverse.

For use, the macroporous silicon monolith can be installed in specially constructed cells (such as the one shown in Fig. 10) to support it in a separator 24 of the cavities formed by lids 19 and 20, so that the gas flow with the reactants 3 can only pass through the macroporous silicon monolith 25 and the gas with the resulting products 28 can be recovered with maximum purity. To allow the photocatalysis process, the reactor is provided with element 23, which is transparent to the working wavelength, but impermeable to the gas to avoid leakage. Through this element 23 the illumination is realized, for example, as illustrated, by coupling a cavity 21 with the appropriate light source 22.

These configurations (with built-in lid) allow simplifying the design of the support cells. Moreover, they allow the concatenation 33, 34 of various macroporous silicon monoliths (see Figs. 15 and 16) -with plugged or open tubes, respectively- in one or two dimensions. The concatenation of monoliths achieves the same purpose as the stacking described above: improved conversion efficiency as well as higher gas flow rates through the system.

In an embodiment, the method for producing the macroporous silicon monolith of the invention comprises manufacturing a macroporous silicon sample/structure 5 with straight pores, and a constant diameter in depth. After this, a surface 8 of the silicon substrate 7 is oxidized. If the silicon substrate 7 has not been completely transformed into silicon oxide, the silicon is removed from most of the structure, resulting in hollow tubular silicon oxide tubes 14, supported by a thin silicon disc, with the tubes 14 open on both sides to allow the flow of reactants 3 and the reaction products 28. Once the structure is functionalized with catalytic and/or photocatalytic materials 16, the macroporous silicon monolith will be ready for use or for assembly in stack structures 30 or other configurations.

To increase the uniformity of absorption in depth along the length of the tubes 14, their diameter can be modulated in depth. Once the tubes 14 are functionalized, they are coated 15 with a uniform thickness of photocatalyst material.

To confine the light 29 that enters the tubes 14 but is not absorbed by the catalytic and/or photocatalytic materials 16, and to minimize its escape from the macroporous silicon monolith, the tube diameters can be modulated to create a photonic crystal that confines the light in the active zone.

To recover the light that, after hitting the macroporous silicon monolith, passes through their entire length but is not absorbed, one or more layers of a reflective material 18 can be placed at the base of the tubes 14. This reflective layer(s) 18 can be deposited before or after the coating 15 is provided.

The scope of the present invention is defined in the following set of claims.

## Claims

1. A macroporous silicon monolith, comprising a silicon substrate (7) including, on a surface (8) thereof, a structure of hollow silicon oxide tubes (14), the latter being functionalized with catalytic and/or photocatalytic materials (16).

2. The macroporous silicon monolith of claim 1, wherein the catalytic and/or photocatalytic materials (16) comprise inorganic oxide micro and/or nanoparticles.

3. The macroporous silicon monolith of claim 1 or 2, wherein the structure of hollow silicon oxide tubes (14) comprises a coating (15) of a photocatalyst material, wherein the catalytic and/or photocatalytic materials (16) are deposited or impregnated over said coating (15).

4. The macroporous silicon monolith of claim 3, wherein the photocatalyst material comprises a semiconductor oxide including titanium oxide (TiO₂).

5. The macroporous silicon monolith of any one of the previous claims, wherein a base of the structure of hollow silicon oxide tubes (14) comprises one or more reflective layers (18).

6. The macroporous silicon monolith of any one of the previous claims, wherein the catalytic and/or photocatalytic materials (16) are selected among titanium dioxide and/or noble metal particles including platinum, gold, and/or palladium.

7. The macroporous silicon monolith of any one of the previous claims, wherein a diameter of the hollow silicon oxide tubes (14) is modulated in depth.

8. The macroporous silicon monolith of any one of the previous claims, wherein the hollow silicon oxide tubes (14) are interconnected through bridges (17).

9. The macroporous silicon monolith of any one of the previous claims, wherein the structure of hollow silicon oxide tubes (14) is sealed with a transparent element (23) comprising a plurality of openings (32) for the entry of reactants (3) and exit of reaction products (28).

10. A method for producing a macroporous silicon monolith, the method comprising:
providing a macroporous silicon sample comprising a silicon substrate;
producing on a surface of the silicon substrate a structure of silicon oxide tubes via a porosification and oxidation process; and
functionalizing the structure of silicon oxide tubes with catalytic and/or photocatalytic materials.

11. The method of claim 10, wherein the porosification and oxidation process comprises a light-assisted electrochemical etching or a reactive ion etching.

12. The method of claim 10 or 11, further comprising coating the structure of silicon oxide tubes with a layer of a photocatalyst material, the inorganic catalytic and/or photocatalytic materials being deposited or impregnated over said layer.

13. The method of any one of the previous claims 10-12, further comprising providing one or more reflective layers over a base of the structure of silicon oxide tubes.

14. The method of any one of the previous claims 10-13, further comprising sealing the structure of silicon oxide tubes with a transparent material comprising a plurality of openings for the entry of reactants and exit of reaction products.

15. The method of any one of the previous claims 10-14, further comprising modulating a diameter of the hollow silicon oxide tubes in depth.
